# EUROPÄISCHE PATENTSCHRIFT

(11) **EP 0 925 696 B1**
(45) Veröffentlichungstag und Bekanntmachung des Hinweises auf die Patenterteilung: **09.06.2004**
(21) Anmeldenummer: 97942805.9
(22) Anmeldetag: 05.09.1997
(51) Int. Cl.: H04Q 7/22, H04Q 7/26

(54) **VERFAHREN ZUM STEUERN DES ABSETZENS VON NOTRUFEN IN SCHNURLOS-TELEKOMMUNIKATIONSSYSTEMEN, INSBESONDERE DECT/GAP-SYSTEMEN**
PROCESS FOR CONTROLLING THE INITIATION OF EMERGENCY CALLS IN CORDLESS TELECOMMUNICATION SYSTEMS, IN PARTICULAR DECT/GAP SYSTEMS
PROCEDE DE CONTROLE DU LANCEMENT D'APPELS D'URGENCE AVEC DES SYSTEMES DE TELECOMMUNICATION SANS CORDON, EN PARTICULIER DES SYSTEMENS DECT/GAP

(30) Priorität: 11.09.1996 DE 19638173
(43) Veröffentlichungstag der Anmeldung: 30.06.1999
(73) Patentinhaber: SIEMENS AKTIENGESELLSCHAFT, 80333 München (DE)
(72) Erfinder: BIEDERMANN, Rolf, D-48683 Ahaus (DE)
(86) Internationale Anmeldenummer: PCT/DE1997/001976
(87) Internationale Veröffentlichungsnummer: WO 1998/011741

(56) Entgegenhaltungen:
- EP-A- 0 490 441
- WO-A-96/12264
- MULDER R J: "DECT, A UNIVERSAL CORDLESS ACCESS SYSTEM" PHILIPS TELECOMMUNICATION REVIEW., Bd. 49, Nr. 3, September 1991, HILVERSUM NL, Seiten 68-73, XP000262491 in der Anmeldung erwähnt

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al:"Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf Verfahren zum Steuern des Absetzens von Notrufen in Schnurlos-Telekommunikationssystemen, insbesondere DECT/GAP-Systemen gemäß dem Oberbegriff des Patentanspruches 1.

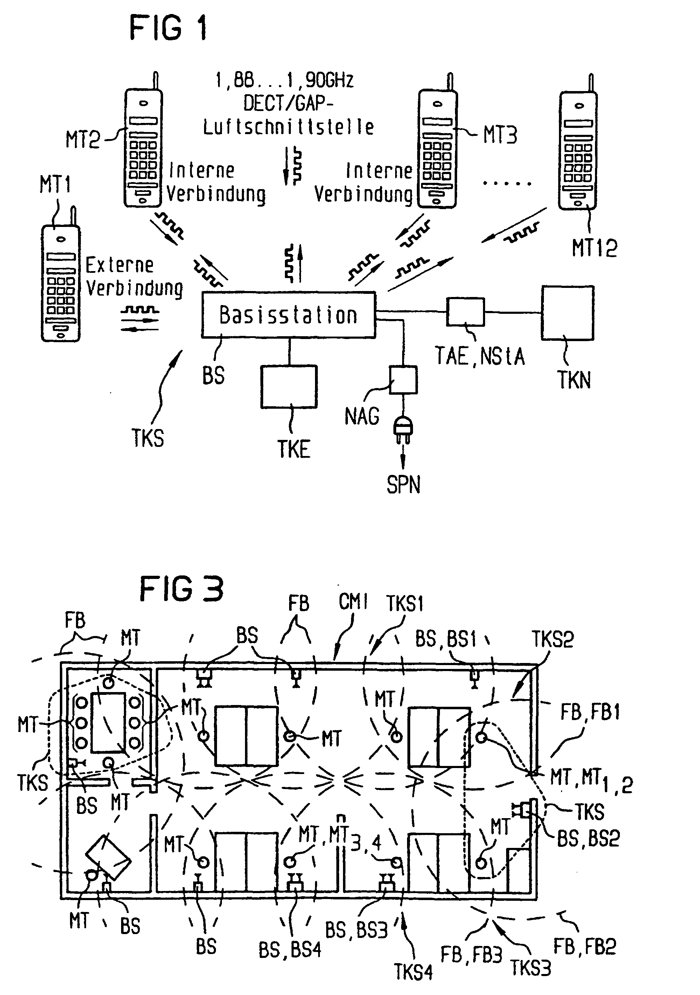

Schnurlos-Telekomunikationssysteme der vorstehend definierten Art sind beispielsweise DECT-Systeme [**D**igital **E**nhanced (früher: **E**uropean) **C**ordless **T**elecommunication; vgl. **(1)**: Nachrichtentechnik Elektronik 42 (1992) Jan./Feb. Nr. 1, Berlin, DE; U. Pilger "Struktur des DECT-Standards", "Seiten 23 bis 29 in **Verbindung mit** der ETSI-Publikation ETS 300175-1...9, Okt. 1992; **(2)**: Telcom Report 16 (1993), Nr. 1, J, H, Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4) :** Philips Telecommunication Review, Vol. 49, No. 3, Sept. 1991, R.J. Mulder:" DECT, a universal cordless access system"; **(5)**: WO 93/21719 (FIG 1 bis 3 mit dazugehöriger Beschreibung)] oder GAP-Systeme (**G**eneric **A**ccess **P**rofile; ETSI-Publikation prETS 300444, April 1995, Final Draft, ETSI, FR), die beispielsweise gemäß der Darstellung in FIGUR 1 aufgebaut sein können.

Der GAP-Standard ist eine Untermenge des DECT-Standards dem die Aufgabe zukommt, die Interoperabilität der DECT-Luftschnittstelle für insbesondere für öffentliche Telekommunikationsanwendungen sicherzustellen.

Wenn im folgenden von DECT/GAP-Systemen die Rede ist, so sind damit private und/oder öffentliche Systeme gemeint.

Nach dem DECT/GAP-Standard können gemäß der Darstellung in FIGUR 1 an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT22 aufgebaut werden. Die Zahl 12 ergibt sich aus einer Anzahl "k" von für den Duplexbetrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

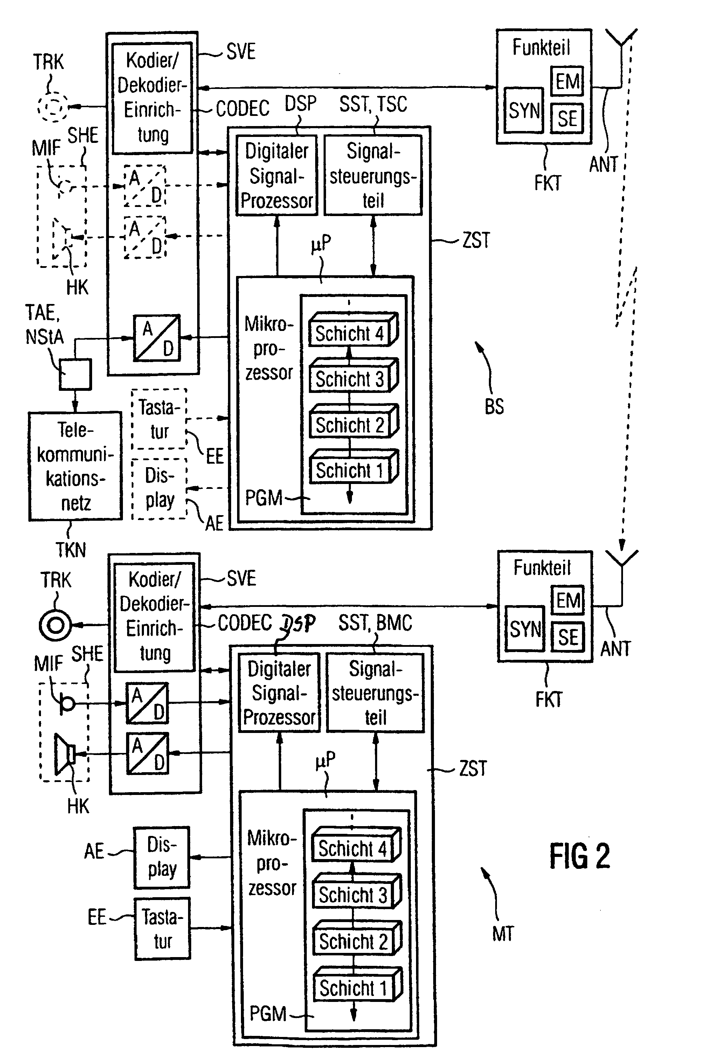

FIGUR 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell [vgl. **(1)**: Unterrichtsblätter - Deutsche Telekom, Jg. 48, 2/1995, Seiten 102 bis 111; **(2)**: ETSI-Publikation ETS 300175-1...9, Oktober 1992] aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

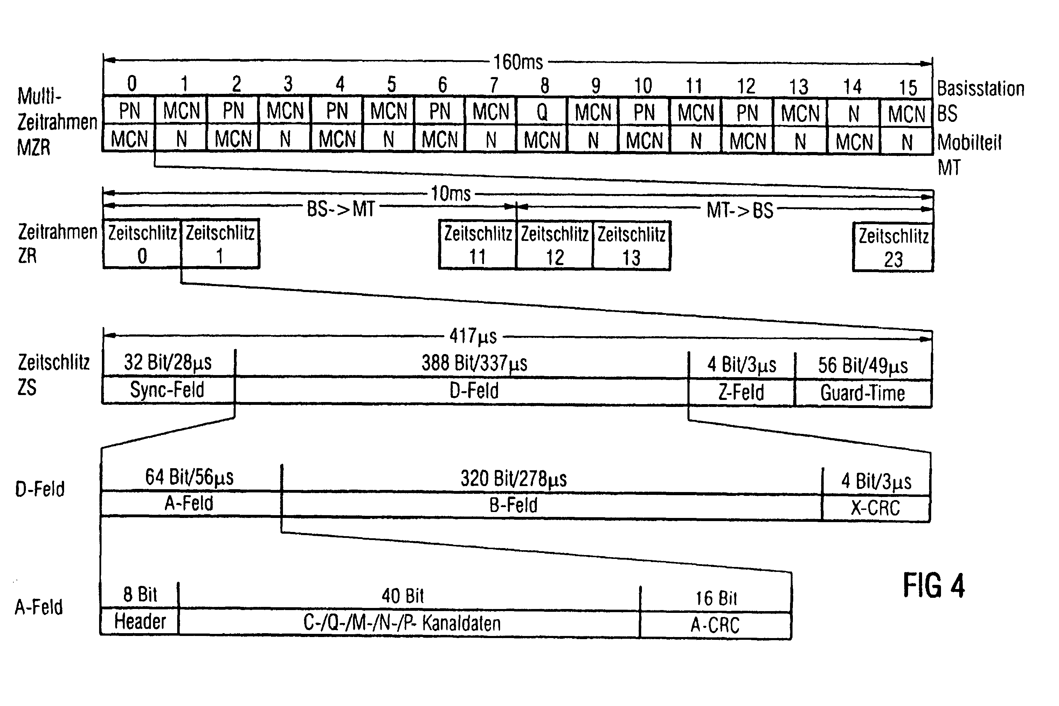

FIGUR 3 zeigt ausgehend von dem DECT-System nach FIGUR 1 ein zellulares DECT/GAP-Multisystem CMI (**C**ordless **M**ulticell **I**ntegration), bei dem mehrere der vorstehend beschriebenen DECT/GAP-Systeme TKS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme TKS ist dabei so ausgeprägt (lückenlose Funkabdeckung des geographischen Ortes), daß einzelne DECT/GAP-Systeme TKS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines ersten Telekommunikationssystems TKS1 in einem ersten Funkbereich FB1 und eine zweite Basisstation BS2 eines zweiten Telekommunikationssystems TKS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten Telekommunikationssystems TKS3 und eine vierte Basisstation BS4 eines vierten Telekommunikationssystems TKS4 in einem gemeinsamen dritten Funkbereich FB3 angeordnet sind und Telekommunikationsverbindungen zu mindestens einem Mobilteil MT_{3,4} aufbauen können.

FIGUR 4 zeigt ausgehend von den FIGUREN 1 bis 3 und in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems TKS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 4 in einer vorgegebenen zeitlichen Abfolge von der Basisstation BS zum Mobilteil MT und vom Mobilteil MT zur Basisstation BS (Time Division Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

Darüber hinaus kommen neben den vorstehend genannten DECT/GAP-Systemen zum Absetzen von Notrufen weitere zukünftige Schnurlos-Telekommunikationssysteme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden beruhen.

Für den Aufbau von Telekommunikationsverbindungen zwischen der/den Basisstation/en BS und den Mobilteilen MT in den DECT/GAP-Systemen gemäß den FIGUREN 1 bis 4 ist nach dem DECT/GAP-Standard beispielsweise die nachfolgend beschriebene Prozedur vorgesehen.

Die Basisstation BS (**R**adio **F**ixed **P**art RFP) gemäß den FIGUREN 1 bis 4 sendet über die DECT-Luftschnittstelle in regelmäßigen Zeitabständen auf Simplex-Übertragungswegen, den sogenannten Dummy-Bearer, Broadcast-Informationen, die von dem Mobilteil MT (**R**adio **P**ortable **P**art RPP) gemäß den FIGUREN 1 bis 4 empfangen werden und diesem für die Synchronisation und den Verbindungsaufbau mit der Basisstation dienen. Die Broadcast-Informationen müssen nicht unbedingt auf einen Dummy-Übertragungsweg (Dummy Bearer) gesendet werden.

Es ist auch möglich, daß kein Dummy-Übertragungsweg vorhanden ist, weil die Basisstation bereits mindestens eine Telekommunikationsverbindung, einen sogenannten Traffic-Übertragungsweg (Traffic-Bearer), zu einem anderen Mobilteil unterhält und auf dem es dann die nötigen Broadcast-Informationen sendet. In diesem Fall kann das Mobilteil, das eine Telekommunikationsverbindung zu der Basisstation haben möchte, die Broadcast-Informationen - wie beim Übertragen der Broadcast-Informationen auf dem Dumny-Übertragungsweg - empfangen.

Die Broadcast-Informationen enthalten - gemäß der ETSI-Publikation ETS 300175-3, Oktober 1992, Kapitel 9.1.1.1 - Informationen über Zugriffsrechte, Systeminformationen und Paging-Informationen.

In den Systeminformationen sind darüber hinaus Zusatzinformationen enthalten, die das Mobilteil darüber informieren, ob die Basisstation eine Basisstation ist, über die Notrufe abgesetzt werden können (im ETSI-RES03R-Gremium und ETSI-RES03N-Gremium im 1. Halbjahr 1996 öffentlich diskutierter Sachverhalt).

Hat das Mobilteil diese Zusatzinformationen empfangen und hat das betreffende Mobilteil zudem Zugriffsrechte auf die die Zusatzinformationen sendende Basisstation (z.B. wenn das Mobilteil bei der Basisstation gemäß der WO 94/10785 Beschreibung der FIGUR 4 - angemeldet und registriert ist) dann wird nach einer speziellen Bedienoberflächenprozedur (z.B. Wählen der Notrufnummer 112, Drücken einer Notruftaste, Auswählen einer Menüinformation "EMERGENCY CALL" etc.) an dem Mobilteil gemäß dem GAP-Standard vgl. ETSI-Publikation prETS 300444, April 1995) basierend auf einer Aufbauprozedur (SETUP-Prozedur) für normale (gewöhnliche) abgehende Telekommunikationsverbindungen über eine Direktrufverbindung [vgl. ETSI-Publikation prETS 300444, April 1995, Kap. 8.10 ("CC_INFO «MULTI KEYPAD»)] eine vorkonfigurierte Notrufnummer automatisch gewählt und eine Notrufverbindung zu Notrufdienststellen hergestellt.

Die vorstehend beschriebene Prozedur zum Übertragen von Notrufen in einem DECT/GAP-System mag für private Systeme, bei denen davon ausgegangen werden kann, daß die Mobilteile eine Zugriffsberechtigung zu Basisstationen haben, ausreichend sein, aber für öffentliche Systeme, bei denen die Zugriffsberechtigung vielleicht nur noch in Einzelfällen gegeben ist, ist die angegebene Prozedur unzureichend.

Weiterhin ist bei der vorstehend beschriebenen Prozedur zum Übertragen von Notrufen in einem DECT/GAP-System nicht immer sichergestellt, daß die Mobilteile mit einer Zugriffsberechtigung auf eine Basisstation in jedem Fall Notrufe absetzen können. So kann beispielsweise der Fall eintreten, daß die betreffende Basisstation z.B. wegen begrenzter Kanalressourcen keine freien Kanäle mehr hat oder aus sonstigen (abnormalen) Gründen eine Anforderung bzw. einen Wunsch für das Absetzen eines Notrufes ablehnen muß (vgl. vgl. ETSI-Publikation prETS 300444, April 1995, Kap. 8.2.2.3 bzw. Kap. 8.8). Das betreffende Mobilteil kann dann zwar nach anderen Basisstationen suchen, über die noch Notrufe abgestzt werden können, aber eine Garantie, daß diese Suche erfogreich ist, gibt es nicht.

Darüber hinaus ist das Problem ungeklärt, wie, wenn erst einmal ein Notruf von einem Mobilteil über eine Basistation zu einer Notrufdienststelle erfolgreich abgestzt worden ist, es also eine Notrufverbindung besteht, wann und insbesondere wer diese bestehende Notrufverbindung wieder beenden bzw. auflösen kahn.

Das Absetzen von Notrufen in drahtlosen Telekommunikationssystemen ist in Mobilfunksystemen nach dem GSM-Standard bekannt (vgl. Druckschrift von M. Mouly, M-B. Pautet: "The GSM Sytem For Mobile Communications" 1992, Int. Standard Book No. 2-9507190-0-7, Seiten 49, 435, 437 und 532 -535).

In diesen Mobilfunksystemen gibt es die vorstehend angesprochenen Probleme im Zusammenhang mit dem Absetzen von Notrufen nicht.

Die der Erfindung zugrundeliegende Aufgabe besteht darin, in Schnurlos-Telekommunikationssystemen, insbesondere DECT/GAP-Systemen das Absetzen von Notrufe effizient und zuverlässig zu steuern.

Diese Aufgabe wird ausgehend von dem in dem Oberbegriff des Patentanspruches 1 definierten Verfahren durch die in dem Kennzeichen des Patentanspruches 1 angegebenen Merkmale gelöst.

Die der Erfindung zugrundeliegende Idee besteht im wesentlichen darin, in Schnurlos-Telekommunikationssystemen durch eine spezielle Prozedur das Absetzen von Notrufen so zu steuern, daß es berücksichtigt wird, daß es in dem System Mobilteile gibt, die eine oder keine Zugriffsberechtigung zu Basisstationen haben.

Vorteilhafte Weiterbildungen der Erfindung sind in den Unteransprüchen angegeben.

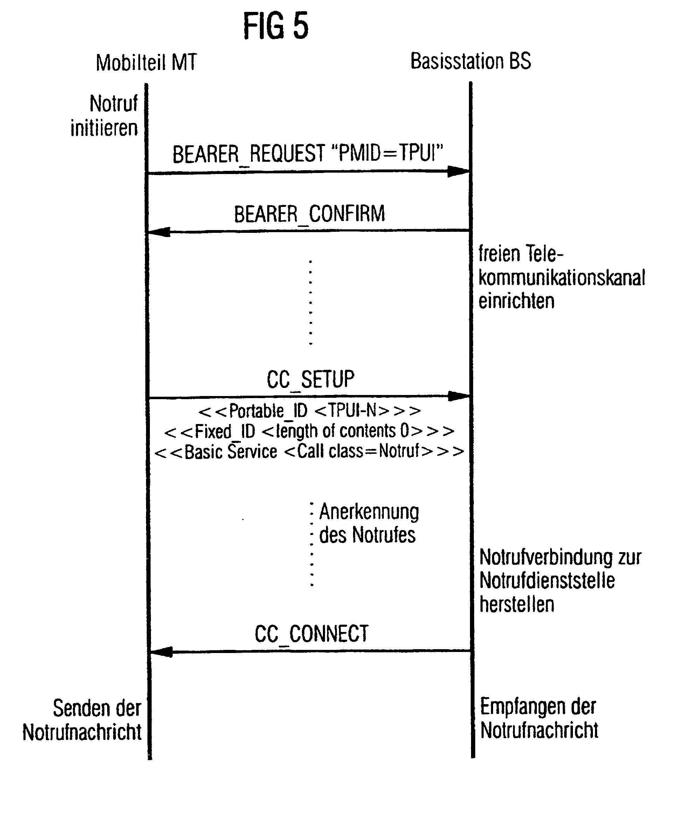

Ein Ausführungsbeispiel der Erfindung wird anhand der FIGUR 5 erläutert.

FIGUR 5 zeigt anhand eines Anreiz-Zustands-Diagrammes eine Notrufübertragungsprozedur, die effizientes und zuverlässiges Absetzen von Notrufen in DECT/GAP-Systemen nach den FIGUREN 1 bis 4 gewährleistet.

Bevor das Mobilteil MT (Portable Part) die dargestellte Prozedur mit der Basisstation BS (Fixed Part) startet, sollte es entweder - wie bereits eingangs erwähnt - eine Zugriffberechtigung zu dieser Basisstation BS haben oder sich, falls diese fehlt, vorsorglich für das Absetzen von Notrufen zumindest temporär auf die Basisstationen BS für eine auf das Absetzen von Notrufen beschränkte Telekommunikation aufsynchronisiert haben. Durch dieses vorzeitige Aufsynchronisieren wird die Aufbauzeit eines Notrufes im Ernstfall wesentlich verkürzt. Das Aufsynchronisieren auf eine Basisstation wird dadurch ermöglicht, daß diese die eingangs erwähnte Zusatzinformation im Rahmen der gesendeten Broadcast-Informationen aussendet. Bei der Suche nach einer Basisstation, auf die das Mobilteil keine Zugriffsberechtigung hat, ist es vorteilhaft, wenn das Mobilteil erst nach öffentlichen Basisstationen, weil diese die Zusatzinformationen gegenüber privaten Basisstationen mit einer größeren Wahrscheinlichkeit aussenden werden, und erst nach einer diesbezüglich erfolglosen Suche nach privaten Basisstationen sucht. Als Kriterium zur Unterscheidung zwischen einer öffentlichen Basisstation und einer privaten Basisstation gibt es die nur von den öffentlichen Basisstationen verwendete Kennung ARC (ACCESS RIGHTS CLASS), die gegenüber der Zusatzinformation wesentlich häufiger übertragen wird.

Hat das Mobilteil MT nach den vorstehenden Kriterien eine Basisstation BS gefunden, so wird an dem Mobilteil MT wie bereits erwähnt im Bedarfsfall durch eine manuelle Bedienoberflächenprozedur das Absetzen eines Notrufs initiiert.

Danach überträgt das Mobilteil MT im Rahmen einer Verbindungsaufbauprozedur (Bearer Setup Procedure; vgl. ETSI-Publikation ETS 300175-3, Oktober 1992, Kap. 10.5.1.1) zur Basisstation BS eine erste MAC-Nachricht "BEARER_REQUEST" (vgl. ETSI-Publikation ETS 300175-3, Oktober 1992, Kap. 7.3.3.2) mit dem Parameter "PMID" (**P**ortable **M**AC **I**dentifier), dem der Parameter "TPUI" (**T**emporary **P**ortable **U**ser **I**dentification; vgl. ETSI-Publikation ETS 300175-6, Oktober 1992, Kap. 6.3.1) als notrufspezifisches temporäres Kennungswort zugewiesen ist. Mit dieser so spezifizierten Nachricht kann die Basisstation BS zwischen einem Notrufwunsch und einem normalen Gesprächswunsch des Mobilteils unterscheiden. Als Antwort auf die empfangene erste Nachricht sendet die Basisstation BS eine zweite MAC-Nachricht "BEARER_CONFIRM" (vgl. ETSI-Publikation ETS 300175-3, Oktober 1992, Kap. 7.3.3.3) zum Mobilteil MT.

Wenn die Basisstation BS (die MAC-Protokollschicht) einen Notrufwunsch erkannt hat, so werden daraufhin höhere Protokollschichten und die Protokollschichtsteuerung (Lower Layer Management Entity LLME) mit der Einrichtung eines freien Telekommunikationskanals beauftragt. Die Einrichtung kann dabei so aussehen, daß entweder - falls alle in der Basisstation BS verfügbaren Telekommunikationskanäle belegt sind - ein freier Kanal durch Auflösen einer bestehenden Telekommunikationsverbindung geschaffen wird oder von vornherein ein freier Kanal reserviert wird. Wenn im vorliegenden Fall von einem Telekommuniationskanal die Rede ist, so sind damit sowohl die netzseitigen Sprach- und Datenkanäle als auch die Funkkanäle bzw. Zeitschlitze gemeint.

Nachdem der freie Telekommuniktionskanal eingerichtet worden ist und dies dem Mobilteil MT mitgeteilt worden ist, überträgt das Mobilteil MT eine erste NWK-Nachricht "CC-SETUP" (vgl. ETSI-Publikation ETS 300175-5, Oktober 1992, Kap. 6.3.2.1) mit
1) dem Informationselement "BASIC SERVICE" (vgl. ETSI-Publikation ETS 300175-5, Oktober 1992, Kap. 7.6.4), in dem das Segment "CALL CLASS" den Inhalt "Notruf" hat,
2) dem Informationselement "PORTABLE IDENTITY" (vgl. ETSI-Publikation ETS 300175-5, Oktober 1992, Kap. 7.7.30) und dem Segment "IPUI-N",
3) dem Informationselement "FIXED IDENTITY" (vgl. ETSI-Publikation ETS 300175-5, Oktober 1992, Kap. 7.7.18) und dem Segment "LENGTH OF CONTENTS 0".

Die Basistation BS soll diese NWK-Nachricht von dem Mobilteil MT ohne Überprüfung der "FIXED_IDENTITY" und der "PORTABLE_IDENTITY" akzeptieren und mit der NWK-Protokollschichtprozedur gemäß dem GAP-Standard (vgl. ETSI-Publikation prETS 300444, April 1995, Kap. 8.2) ohne Überprüfung von NWK-Protokollschicht-Kennungen fortfahren.

Nachdem der Notruf gemäß dem GAP-Standard anerkannt ist, stellt die Basisstation BS die Notrufverbindung zur Notrufdienststelle her und überträgt eine zweite NWK-Nachricht "CC-CONNECT" (vgl. ETSI-Publikation ETS 300175-5, Oktober 1992, Kap. 6.3.2.6) zum Mobilteil MT. Die Notrufverbindung wird dabei von einer öffentlichen Basisstation vorzugsweise automatisch und von einer privaten Basisstation vorzugsweise durch das automatische Wählen einer Notrufnummer hergestellt.

An dem Mobilteil MT kann nun die eigentliche Notrufnachricht unmittelbar oder mittelbar eingegeben werden. Über die Basisstation BS gelangt diese Notrufnachricht zur Notrufdienststelle.

Im weiteren ist es vorteilhaft, daß, wenn die Notrufverbindung besteht und die Notrufnachricht übertragen worden ist, die bestehende Notrufverbindung von der Basisstation wieder abgebaut wird. Dadurch ist es möglich, daß im Notfall, z.B. Unfall, die Notrufverbindung durch unbeabsichtigte Bedienoberflächenprozeduren am Mobilteil nicht abgebaut werden kann.

## Patentansprüche

1. Verfahren zum Steuern des Absetzens von Notrufen in Schnurlos-Telekommunikationssystemen, insbesondere DECT-Systemen, bei dem Zusatzinformationen von Schnurlos-Basisstationen (BS) gesendet werden, die durch Schnurlos-Mobilteile (MT) empfangen werden und diesen angeben, daß die Notrufe durch systemspezifische Notrufübertragungsprozeduren über die Schnurlos-Basisstationen (BS) zu Notrufdienststellen absetzbar sind,
**dadurch gekennzeichnet, daß**
sich erste Schnurlos-Mobilteile (MT), die die Zusatzinformationen von ersten Schnurlos-Basisstationen (BS) empfangen, zu denen die ersten Schnurlos-Mobilteile (MT) keine Zugriffsberechtigung haben, vorsorglich für das Absetzen von Notrufen durch systemspezifische erste Notrufübertragungsprozeduren zumindest temporär auf die ersten Schnurlos-Basisstationen (BS) für eine auf das Absetzen von Notrufen beschränkte Telekommunikation aufsynchronisieren.

2. Verfahren nach Anspruch 1, **dadurch gekennzeichnet, daß**
die erste Notrufübertragungsprozedur folgende prozedurale Schritte enthält:
a) durch eine manuelle Bedienoberflächenprozedur an dem Schnurlos-Mobilteil (MT) wird der Notruf initiiert,
b) das Schnurlos-Mobilteil (MT) überträgt eine erste Nachricht (BEARER_REQUEST) mit einem notrufspezifischen temporären ersten Kennungswort (TPUI) zur Schnurlos-Basisstation (BS), mit der es bei der Schnurlos-Basisstation (BS) um eine Notrufverbindung zur Notrufdienststelle nachsucht,
c) die Schnurlos-Basisstation (BS) unterscheidet durch das empfangene erste Kennungswort zwischen einem gewöhnlichen Kommunikationswunsch und einem Notruf,
d) die Schnurlos-Basisstation (BS) beantwortet die erste Nachricht mit einer zweiten Nachricht (BEARER_CONFIRM) und sorgt dafür, daß ein freier Telekommunikationskanal für die Notrufverbindung eingerichtet wird,
e) das Schnurlos-Mobilteil (MT) überträgt eine dritte Nachricht (CC_SETUP) mit einem einen Rufindikator (CALL CLASS) für den Notruf enthaltenden ersten Informationselement (BASIC SERVICE), mit einem ein mobilteilspezifisches zweites Kennungswort enthaltenden zweiten Informationselement (PORTABLE_IDENTITY) und mit einem einen Leerinhaltsindikator (LENGTH OF CONTENTS 0) enthaltenden dritten Informationselementes (FIXED_IDENTITY) zur Schnurlos-Basisstation (BS), mit der die Schnurlos-Basisstation (BS) veranlaßt, wird, die Notrufverbindung zur Notrufdienststelle aufzubauen,
f) die Schnurlos-Basisstation (BS) baut die Notrufverbindung zur Notrufdienststelle auf und teilt dem Schnurlos-Mobilteil (MT) als Antwort auf die dritte Nachricht durch eine vierte Nachricht (CC_CONNECT) den Aufbau der Notrufverbindung mit.

3. Verfahren nach Anspruch 2, **dadurch gekennzeichnet, daß**
die Notrufverbindung zur Notrufdienststelle durch das automatische Wählen einer Notrufnummer aufgebaut wird, wenn die erste Schnurlos-Basisstation (BS) eine private Schnurlos-Basisstation ist.

4. Verfahren nach Anspruch 2, **dadurch gekennzeichnet, daß**
die Notrufverbindung zur Notrufdienststelle automatisch aufgebaut wird, wenn die erste Schnurlos-Basisstation (BS) eine öffentliche Schnurlos-Basisstation ist.

5. Verfahren nach einem der Ansprüche 2 bis 4, **dadurch gekennzeichnet, daß**
der freie Telekommunikationskanal für die Notrufverbindung eingerichtet wird, indem aus der Anzahl der in der Schnurlos-Basisstation (BS) zur Verfügung stehenden Telekommunikationskanäle ein Telekommunikationskanal reserviert wird.

6. Verfahren nach einem der Ansprüche 2 bis 4, **dadurch gekennzeichnet, daß**
der freie Telekommunikationskanal für die Notrufverbindung eingerichtet wird, indem aus der Anzahl der in der Schnurlos-Basisstation (BS) zur Verfügung stehenden Telekommunikationskanäle, wenn diese alle belegt sind, ein Telekommunikationskanal von den Telekommunikationskanälen frei gemacht wird.

7. Verfahren nach einem der Ansprüche 2 bis 6, **dadurch gekennzeichnet, daß**
der Telekommunikationskanal aus einem Funkkanal zwischen der Schnurlos-Basisstation (BS) und dem Schnurlos-Mobilteil (MT) sowie aus einem Sprach-/Datenkanal zwischen der Schnurlos-Basisstation (BS) und der Notrufdienststelle besteht.

8. Verfahren nach einem der Ansprüche 2 bis 6, **dadurch gekennzeichnet, daß**
die aufgebaute Notrufverbindung innerhalb des Schnurlos-Telekommunikationssystems von der Schnurlos-Basisstation (BS) abgebaut wird.

9. Verfahren nach einem der Ansprüche 1 bis 7 **dadurch gekennzeichnet, daß**
das Schnurlos-Telekommunikationssystem ein DECT/GAP-System ist.

10. Verfahren nach einem der Ansprüche 1 bis 7, **dadurch gekennzeichnet, daß**
das Schnurlos-Telekommunikationssystem ein PHS-System, ein WACS-System oder ein PACS-System ist.

11. Verfahren nach einem der Ansprüche 1 bis 7, **dadurch gekennzeichnet, daß**
das Schnurlos-Telekommunikationssystem ein CDMA-System, ein TDMA-System, ein FDMA-System oder ein bezüglich der gennannten Übertragungsstandards hybrides System ist.

## Claims

1. Method for controlling the initiation of emergency calls in cordless telecommunication systems, in particular DECT/GAP systems in which additional information can be sent from cordless base stations (BS) that is received by cordless mobile handsets (MT) and used such that emergency calls can be initiated through system-specific procedures via the cordless base stations (BS) to the emergency services,
**characterized in that**
the first cordless mobile handsets (MT) that receive the additional information from the first cordless base stations (BS) to which the first cordless mobile handsets (MT) have no access authorization rights synchronize themselves with the first cordless base stations (BS) as a precaution for the initiation of emergency calls at least temporarily using system-specific first emergency call procedures for telecommunication restricted to the initiation of emergency calls.

2. Method according to Claim 1, **characterized in that**
the first emergency call transfer procedure contains the following procedural steps:
a) the emergency call is initiated by a manual user interface procedure on the cordless mobile handset (MT),
b) the cordless mobile handset (MT) transmits a first message (BEARER REQUEST) with an emergency call-specific temporary initial identifier (TPUI) to the cordless base station (BS) with which it searches on the cordless base station (BS) for an emergency connection to the emergency services,
c) the cordless base station (BS) distinguishes through the first identifier between a standard request for communication and an emergency call,
d) the cordless base station (BS) replies to the first message with a second message (BEARER_CONFIRM) and thus ensures that a free telecommunications channel is set up for the emergency connection,
e) the cordless mobile handset (MT) transmits a third message(CC_SETUP) with a call indicator (CALL CLASS) for the first information element (BASIC SERVICE) contained in the emergency call, with a second information element (PORTABLE_IDENTITY) containing a mobile handset specific second identifier and a third information
element (FIXED_IDENTITY) containing an empty contents indicator (LENGTH OF CONTENTS 0) to a cordless base station (BS) with which the cordless base station (BS) then initiates the emergency connection to the emergency services,
f) the cordless base station (BS) initiates the emergency connection to the emergency services and informs the cordless mobile handset (MT) in reply to the third message through a fourth message (CC_CONNECT) of the initiation of the emergency connection.

3. Method according to Claim 2, **characterized in that**
the emergency connection to the emergency services is initiated by automatically dialing an emergency number if the first cordless base station (BS) a private base station.

4. Method according to Claim 2, **characterized in that**
the emergency connection to the emergency services is automatically initiated if the first cordless base station (BS)is public base station.

5. Method according to one of the claims 2 to 4 **characterized in that**
the free telecommunications channel for the emergency call connection is initiated by reserving one telecommunication channel from the number of available telecommunications channels in the base station (BS).

6. Method according to one of the claims 2 to 4 **characterized in that**
the free telecommunications channel for the emergency call connection is initiated by freeing up a telecommunication channel from the number of available telecommunications channels in the base station (BS) if these are all busy.

7. Method according to one of the claims 2 to 6 **characterized in that**
the telecommunications channel comprises a radio channel between the cordless base station (BS) and the cordless mobile handset (MT) and a voice/data channel between the cordless base station (BS) and the emergency services.

8. Method according to one of the claims 2 to 6 **characterized in that**
the emergency connection that is initiated in the cordless telecommunications system is cleared down by the cordless base station (BS).

9. Method according to one of the claims 1 to 7, **characterized in that**
the cordless telecommunications system is a DECT/GAP system.

10. Method according to one of the claims 1 to 7 **characterized in that**
the cordless telecommunications system is a PHS system, a WACS system or a PACS system.

11. Method according to one of the claims 1 to 7 **characterized in that**
the cordless telecommunication system is a CDMA system, a TDMA system, a FDMA system or a hybrid system in terms of the stated transmission standards.

## Revendications

1. Procédé de contrôle du lancement d'appels d'urgence dans des systèmes de télécommunication sans fil, en particulier dans des systèmes DECT, dans lequel des informations additionnelles sont émises par des stations de base sans fil (BS), lesquelles sont reçues par des unités mobiles sans fil (MT) et signalent à ces dernières que les appels d'urgence peuvent être lancés par des procédures de transmission d'appels d'urgence spécifiques au système via les stations de base sans fil (BS) vers des services d'appels d'urgence, **caractérisé en ce que** des premières unités mobiles sans fil (MT) qui reçoivent les informations additionnelles de premières stations de base sans fil (BS) pour lesquelles les premières unités mobiles sans fil (MT) n'ont pas d'autorisation d'accès se synchronisent sur les premières stations de base sans fil (BS) en prévision du lancement d'appels d'urgence par des premières procédures de transmission d'appels d'urgence spécifiques au système, du moins temporairement et aux fins d'une télécommunication limitée au lancement d'appels d'urgence.

2. Procédé selon la revendication 1, **caractérisé en ce que** la première procédure de transmission d'un appel d'urgence comporte les étapes procédurales suivantes:
a) l'appel d'urgence est initialisé au niveau de l'unité mobile sans fil (MT) par une procédure manuelle sur la surface de commande;
b) l'unité mobile sans fil (MT) transmet un premier message (BEARER_REQUEST) avec un premier mot identificateur (TPUI) temporaire spécifique à l'appel d'urgence à la station de base sans fil (BS) avec lequel il demande, dans la station de base sans fil (BS), une liaison d'appel d'urgence vers le service d'appels d'urgence;
c) à l'aide du premier mot identificateur reçu, la station de base sans fil (BS) fait la distinction entre une demande de communication ordinaire et un appel d'urgence;
d) la station de base sans fil (BS) répond au premier message par un deuxième message (BEARER_CONFIRM) et fait en sorte qu'un canal de télécommunication libre est créé pour la liaison d'appel d'urgence;
e) l'unité mobile sans fil (MT) transmet un troisième message (CC_SETUP) avec un premier élément d'information (BASIC SERVICE) contenant un indicateur d'appel (CALL CLASS) pour l'appel d'urgence, avec un deuxième élément d'information (PORTABLE_IDENTITY) contenant un deuxième mot identificateur spécifique à l'unité mobile et avec un troisième élément d'information (FIXED_IDENTITY) contenant un indicateur de contenu vide (LENGTH OF CONTENTS 0) vers la station de base sans fil (BS), lequel fait établir à la station de base sans fil (BS) la liaison d'appel d'urgence vers le service d'appels d'urgence;
f) la station de base sans fil (BS) établit la liaison d'appel d'urgence vers le service d'appels d'urgence et communique, par un quatrième message (CC_CONNECT), l'établissement de la liaison d'appel d'urgence à l'unité mobile sans fil (MT) en réponse au troisième message.

3. Procédé selon la revendication 2, **caractérisé en ce que** la liaison d'appel d'urgence vers le service d'appels d'urgence est établie par composition automatique d'un numéro d'appel d'urgence lorsque la première station de base sans fil (BS) est une station de base sans fil privée.

4. Procédé selon la revendication 2, **caractérisé en ce que** la liaison d'appel d'urgence vers le service d'appels d'urgence est établie automatiquement lorsque la première station de base sans fil (BS) est une station de base sans fil publique.

5. Procédé selon l'une des revendications 2 à 4, **caractérisé en ce que** le canal de télécommunication libre pour la liaison d'appel d'urgence est créé du fait qu'un canal de télécommunication est réservé sur le nombre des canaux de télécommunication disponibles dans la station de base sans fil (BS).

6. Procédé selon l'une des revendications 2 à 4, **caractérisé en ce que** le canal de télécommunication libre pour la liaison d'appel d'urgence est créé du fait que, sur le nombre des canaux de télécommunication disponibles dans la station de base sans fil (BS), lorsque tous ceux-ci sont occupés, un canal de télécommunication des canaux de télécommunication est libéré.

7. Procédé selon l'une des revendications 2 à 6, **caractérisé en ce que** le canal de télécommunication se compose d'un canal radio entre la station de base sans fil (BS) et l'unité mobile sans fil (MT) ainsi que d'un canal vocal / de données entre la station de base sans fil (BS) et le service d'appels d'urgence.

8. Procédé selon l'une des revendications 2 à 6, **caractérisé en ce que** la liaison d'appel d'urgence établie est terminée par la station de base sans fil (BS) à l'intérieur du système de télécommunication sans fil.

9. Procédé selon l'une des revendications 1 à 7, **caractérisé en ce que** le système de télécommunication sans fil est un système DECT/GAP.

10. Procédé selon l'une des revendications 1 à 7, **caractérisé en ce que** le système de télécommunication sans fil est un système PHS, un système WACS ou un système PACS.

11. Procédé selon l'une des revendications 1 à 7, **caractérisé en ce que** le système de télécommunication sans fil est un système CDMA, un système TDMA, un système FDMA ou un système hybride par rapport aux normes de transmission citées.
